# EUROPÄISCHE PATENTSCHRIFT

(11) **EP 2 263 780 B1**
(45) Veröffentlichungstag und Bekanntmachung des Hinweises auf die Patenterteilung: **06.12.2017**
(21) Anmeldenummer: 09007991.4
(22) Anmeldetag: 18.06.2009
(51) Int. Cl.: B01D 53/83, F23J 15/00

(54) **Rauchgasreinigungsanlage mit Düsenvariation**
Exhaust gas purification assembly with nozzle variation
Installation de nettoyage de gaz de fumées dotée d'une variation de buses

(43) Veröffentlichungstag der Anmeldung: 22.12.2010
(73) Patentinhaber: ENVIROSERV GmbH, 45136 Essen (DE)
(72) Erfinder: Feldkamp, Markus, D-46244 Bottrop (DE); Rüdiger, Baege, 45356 Essen (DE); Dickamp, Markus, 44892 Bochum (DE); Moser, Christian, 45359 Essen (DE); Risse, Theo, 59368 Werne (DE)
(74) Vertreter: Krenzel, Joachim

(56) Entgegenhaltungen:
- EP-A- 0 823 278
- EP-A- 1 629 880
- WO-A-2006/032288
- CN-A- 101 402 019
- CN-A- 101 417 207
- CN-Y- 2 834 677
- CN-Y- 201 195 099
- DE-A1- 2 430 487
- DE-A1- 3 704 637
- DE-A1- 4 220 493
- DE-C1- 10 058 548
- JP-A- 55 162 332

## Beschreibung

Die vorliegende Erfindung betrifft eine Rauchgasreinigungsanlage mit einem Wirbelschichtreaktor, der über eine Rauchgaseinlasseinheit und eine Rauchgasauslasseinheit verfügt.

Rauchgasreinigungsanlagen sind im Stand der Technik umfangreich bekannt. Eine gattungsgemäße Anlage ist beispielsweise in der WO 2006/032288 A1 beschrieben. Mittels solcher Anlagen werden Verfahren zur Abscheidung von Schadgasen durchgeführt, beispielsweise HCl, HF, SO₂. Auch Dioxine, Furane und Schwermetalle, beispielsweise Quecksilber, können wirkungsvoll abgeschieden werden, wenn zusätzliche sogenannte Sorbenzien wie Herdofenkoks, Aktivkohle der dergleichen beigegeben werden. Zur Durchführung des Verfahrens werden möglicherweise Wirbelschichtreaktoren eingesetzt, in welche das zu reinigende Rauchgas über eine Rauchgaseinlasseinheit eingeleitet wird. Diese Einheit ist üblicherweise eine vom Kessel herangeführte Rohrleitung mit einem oder mehreren Auslässen in den Reaktorbereich, Im Reaktor wird ein Sorptionsmittel eingelagert oder eingebracht. Es bildet sich dann in bekannter Weise eine Wirbelschicht aus. Reaktoren können mit zirkulierenden Wirbelschichten oder im Flugstromverfahren betrieben werden. Das Rauchgas und das Sorptionsmittel reagieren miteinander und die Schadgase werden auf diese Weise aus dem Rauchgas abgeschieden. Das Gesamtgas, also Rauchgas mit den mitgeführten Abscheidungsrückständen und Sorptionsmittelresten wird über eine Rauchgasauslasseinheit in eine nachgeschaltete Abscheideeinheit, üblicherweise Filtereinheiten, weitergeleitet. In der Filtereinheit wird das Rauchgas von den Abscheidungsrückständen befreit und anschließend freigegeben. Die Abscheidungsrückstände werden zum Teil zum Wirbelschichtreaktor zurückgeführt oder nach Sammlung entsorgt oder weiterverwendet.
Einleitungsseitig ist bei großen Anlagen mit Rauchgasvolumenströmen größer 2.000.000 Nm³/h der Betrieb mehrerer Absorber notwendig, da die An- und Durchströmungsprozesse in der Absorptionszone, die Feststoffverteilung, die Temperaturverteilung sowie Druckverluste und gegebenenfalls Verschmutzungs- und Ablagerungsneigungen den Parallelbetrieb erforderlich machen.
Es müssen aber bei großen Anlagen, zum Beispiel mit Rauchgasvolumenströmen größer 2.000.000 Nm³/h, auch zwei oder mehrere Rauchgasreinigungsanlagen parallel betrieben werden, da insbesondere die Kapazität der dem Reaktor nachgeschalteten Filtereinheiten beschränkt ist. Derartige Filtereinheiten sind beispielsweise bekannte Schlauchfiltereinheiten, elektrische Filter oder dergleichen.
Ausgehend vom vorbekannten Stand der Technik liegt der vorliegenden Erfindung die **Aufgabe** zugrunde, eine Rauchgasreinigungsanlage der gattungsgemäßen Art dahingehend weiterzubilden, dass auch bei großen Anlagen der Einsatz nur eines Absorber ausreichend ist.
Zur technischen **Lösung** dieser Aufgabe wird eine Rauchgasreinigungsanlage mit den Merkmalen des Anspruches 1 vorgeschlagen. Weitere Vorteile und Merkmale ergeben sich aus den Unteransprüchen. Vorteilhaft weist die Rauchgasauslasseinheit wenigstens zwei winklig zueinander angeordnete Rauchgasaustritte auf. Damit ist es möglich, den aus dem Reaktor zu den Filtereinheiten geführten Abgasstrom zu teilen und in unterschiedliche Filterbaugruppen einzuleiten. Hieraus ergeben sich erhebliche Vorteile, da die Anströmung der benötigten nachgeschalteten Filter erheblich verbessert wird. Dort können Schlauchfilter, Elektrofilter oder ähnlich Filter eingesetzt werden. Die Filter können in platzsparender Weise optimiert angeordnet werden und in den Strömungen zu den Filtern kann eine homogenere Feststoffverteilung vorgesehen sein. Es ergeben sich geringere Druckverluste des Absorbers und dieser neigt nicht im Kopfbereich zu Verschmutzungs- und Ablagerungsneigungen.

In vorteilhafter Weise wird die erfindungsgemäße Rauchgasauslasseinheit als Haube mit zwei Austrittsrohranschlüssen ausgeführt und auf den Reaktor aufgesetzt. Vorteilhaft wird vorgeschlagen, dass die Rauchgaseinlasseinheit des Reaktors wenigstens zwei winklig zueinander angeordnete Rauchgaseintritte aufweist. Auf diese Weise kann der Reaktor mit unterschiedlichen Rauchgasströmen beaufschlagt werden. Es ergibt sich eine bessere An- und Durchströmung der Absorptionszone. In vorteilhafter Weise schließt sich an den Rauchgaseinlass eine Düseneinheit an. Dieses führt zu einer Durchströmungsverbesserung. Die Düseneinheit kann eine seitliche Feststoffeintragseinheit aufweisen, so dass auf diese Weise eine homogenere Feststoffverteilung im Absorber erfolgt. Insgesamt ergibt sich eine bessere Temperaturverteilung und es braucht nur weniger Wasser zur Kühlung des Rohgasstromes eingedüst werden. Es ergeben sich auch geringere Druckverluste im Absorber. Gemäß einem weiteren vorteilhaften Vorschlag der Erfindung sind an einzelnen Düsen oder an allen Düsen seitliche Feststoffeinlässe ausgebildet.
Die Grundforderung zum sinnvollen wirtschaftlichen Betrieb mit langer Standzeit entsprechender Anlagen beziehungsweise entsprechender Reaktoren besteht in der weitgehend gleichmäßigen Verteilung von Gas und Feststoffen über das gesamte Reaktorvolumen. Bei großen Anlagen für Rauchgasvolumenströme größer 2.000.000 Nm³/h ist dies schwierig, wenn nur eine Feststoffeingabe, nur ein Gasabzug und/oder nur ein Gaseinlass vorgegeben sind. Entsprechend wird erfindungsgemäß durch einfache Maßnahmen dafür gesorgt, dass eine gute gleichmäßige Gas-/Feststoffverteilung über das gesamte Reaktorvolumen möglich wird. Gemäss der Erfindung wird vorgeschlagen, dass in der Düseneinheit Düsen mit unterschiedlichem Querschnitt eingesetzt sind. Dies bezieht sich zum einen auf die Form, zum anderen auf den Durchmesser. So können Düsen mit rundem Querschnitt und unterschiedlichen Durchmessern eingesetzt sein, Düsen mit unterschiedlichen Querschnittsformen wie Vielecken, rund und dergleichen oder beliebigen Kombinationen der beschriebenen Möglichkeiten eingesetzt sein.
Damit können die Einheiten an- und durchströmungstechnisch optimiert werden und der Absorber in vorteilhafter Weise auch für große Anlagen als Einzelabsorber eingesetzt werden.

Mit weiterem Vorteil wird vorgeschlagen, dass eine Dampf-Befeuchtung durchgeführt wird. Über die konkrete Wirkung des Wassers im Reaktor bestehen in der Fachwelt unterschiedliche Auffassungen. Eine höchstwahrscheinliche Betrachtungsweise besagt, dass es auf den Partialdruck des Wassers im Gas ankommt, um entsprechend hohe Wirkungen zu erzielen. Das Wasser hat in dem Sinne dann keine Kühlaufgaben. Unter diesem Gesichtspunkt ist eine Befeuchtung mit Dampf von besonderem Vorteil, weil man eine besonders gute Verteilung und einen guten Partialdruckeffekt erzielt. Die gleichmäßigen Verteilungen von Gas und Feststoffen, gegebenenfalls auch Wasser über das gesamt Reaktorvolumen bringen insbesondere die Vorteile, dass es zu sehr guten Durchströmungen kommt. Dies verhindert unnötige Ablagerungen und ein Zubacken des Reaktors und auch im Kopfbereich kommt es nicht zu Verschmutzungs- und Ablagerungsneigungen.
Die Feststoffe werden üblicherweise unter Druck in den Reaktor eingeblasen, gemäß der Erfindung in den seitlichen Feststoffeintrag der Düseneinheit. Diese hat vorzugsweise einen runden oder rechteckigen Querschnitt und die Düsenbestückung, so dass sich auf diese Weise eine optimale Feststoffverteilung, eine optimale Befeuchtung und eine optimale Temperaturverteilung ergeben.
Mit der Erfindung werden mit überschaubarem wirtschaftlichen Aufwand erstellbare Optimierungen einer Rauchgasreinigungsanlage bereitgestellt, die es ermöglichen, auch bei großen Anlagen für große Rauchgasvolumenströme mit hoher Leistung nur einen Wirbelschichtreaktor einzusetzen. Es ergeben sich daraus erhebliche wirtschaftliche Vorteile und technische Optimierungsmöglichkeiten.
Weitere Vorteile und Merkmale der Erfindung ergeben sich aus der folgenden Beschreibung anhand der Figuren. Dabei zeigen:
- Fig. 1: eine schematische Darstellung einer Rauchgasreinigungsanlage nach dem Stand der Technik;
- Fig. 2: eine schematische Darstellung einer Rauchgasreinigungsanlage gemäß einer ersten Ausführungsform;
- Fig. 3: eine schematische Darstellung des Düsenbereiches einer erfindungsgemäßen Rauchgasreinigungsanlage in einer ersten Ausführungsform und
- Fig. 4: eine schematische Darstellung des Düsenbereiches einer erfindungsgemäßen Rauchgasreinigungsanlage in einer zweiten Ausführungsform.

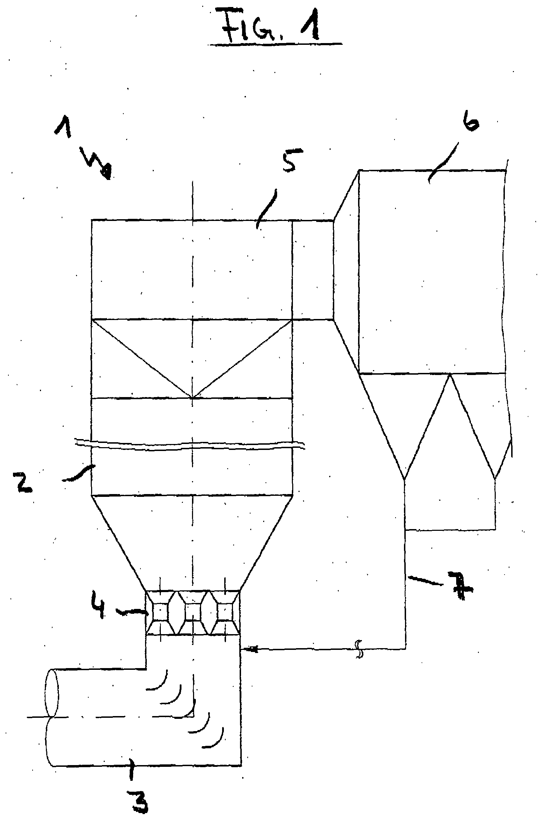

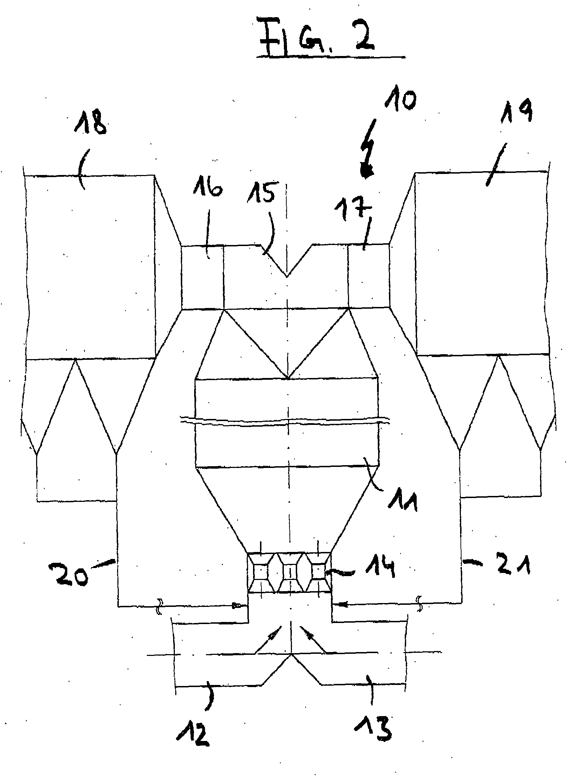

Bei der in Fig. 1 gezeigten Rauchgasreinigungsanlage 1 nach dem Stand der Technik wird ein Wirbelschichtreaktor 2 mit Rauchgas beschickt. Dieses wird von einem Kessel über eine Leitung 3 und durch Düsen 4 in den Wirbelschichtreaktor 2 eingebracht. Dort wird ein eingebrachtes Sorptionsmittel von dem zu reinigenden Rauchgas durchströmt. Es bildet sich eine zirkulierende Wirbelschicht in Abhängigkeit der Strömungsgeschwindigkeiten und der eingebrachten Partikelgrößen. Die Reaktion zwischen dem Rauchgas beziehungsweise den enthaltenen Schadstoffen und dem Sorptionsmittel erfolgt in der Wirbelschicht. Durch eine in Strömungsrichtung des zu reinigenden Rauchgases oberen Ende des Wirbelschichtreaktors 2 befindet sich eine Auslasseinheit 5, über welche das Rauchgas-/Sorptionsmittelgemisch aus dem Wirbelschichtreaktor 2 in eine Filtereinheit 6 überführt wird. In der Filtereinheit 6 befinden sich beispielsweise Schlauchfilter oder beispielsweise auch Elektrofilter oder Kombinationen der beiden. Über Rückführleitungen 7 können auch dem Rauchgas gefilterte Sorptionsmittelanteile in den Reaktor 2 rückgeführt werden. Das gereinigte Rauchgas wird über nicht dargestellte weitere Züge weitergeleitet.
Das Rauchgas passiert von der Einlassleitung 3 bis zu Auslassleitung 5 in an sich bekannter Weise teilweise eckige und teilweise runde Querschnitte. Die Durchströmungsverhältnisse einerseits und die Neigung zu Ablagerungen und damit über lange Zeit einem möglichen Zuwachsen der Querschnitte hängen im Wesentlichen ab von der Gleichmäßigkeit der Verteilung von Gas und Feststoffen über das gesamte Reaktorvolumen. Bei größeren Anlagen beispielsweise für Rauchgasvolumenströme größer 2.000.000 Nm³/h können die im Stand der Technik bekannten Strömungseinheiten wie Einlassleitungen, Auslassleitungen, Düsen, Querschnittsverhältnisse und dergleichen eine gleichmäßige Verteilung nicht gewährleisten und damit ein Ablagern und Verunreinigen des Reaktors nicht verhindern.
Bei dem in Fig. 2 gezeigten beispielhaften Ausführungsbeispiel für eine Rauchgasreinigungsanlage 10 umfasst diese einen Wirbelschichtreaktor 11. Dieser hat im Zustrombereich eine Düseneinheit 14. Im Unterschied zum Stand der Technik hat das gezeigte Ausführungsbeispiel zwei Einlassleitungen 12, 13 sowie zwei Auslassleitungen 16, 17. Die gezeigten Auslass- und Einlassleitungen sind winklig zueinander angeordnet. So können die Leitungen auf entsprechenden Leitungswegen von einem großen Kessel (nicht gezeigt) zugeführt werden oder zur Erzeugung einer entsprechend großen Leistung von unterschiedlichen Kesseln. Auch in diesem Fall können entsprechend große Anlagen mit nur einem Wirbelschichtreaktor betrieben werden.

Nachdem das Rauchgas den Düsenbereich 14 passiert hat, gelangt es in die Wirbelschicht oder bei hoher Geschwindigkeit den Flugstrom im Reaktor 11. Dort wird es mit dem Sorptionsmittel in bekannter Weise in Kontakt gebracht und verlässt den Reaktor über den Haubenbereich 15 in zwei winklig zueinanderstehende Auslassleitungen 16, 17, an die sich unterschiedliche Filtereinheiten 18, 19 mit entsprechenden Rückführungsleitungen 20, 21 und im Übrigen nicht gezeigten Abführungsleitungen anschließen.

Für den Fachmann ist offensichtlich, dass diese Anordnungen unterschiedliche Vorteile bieten und in unterschiedlichen Kombinationen einsetzbar sind. So kann ein Reaktor über eine Zuführleitung beschickt werden und den Gasstrom im oberen Haubenbereich in zwei oder mehr Abführleitungen aufteilen, die in unterschiedliche Filtereinheiten führen. Dies hat den Vorteil, dass eine erhebliche Durchströmungsverbesserung und damit eine Vergleichmäßigung der Verteilung von Gas und Feststoffen erreicht werden kann. Darüber hinaus wird die Gesamtanlage nicht durch die Kapazität einer Filteranlage beschränkt. Im Übrigen können die Filter nach bautechnischen Gesichtspunkten in kompakter Weise positioniert werden, so dass es baulich entsprechende Vorteile gibt.

Umgekehrt kann ein entsprechender Wirbelschichtreaktor durch zwei oder mehrere Zuführleitungen beschickt werden, wobei die Gase dann die Düseneinheit passieren, den Wirbelschichtreaktor selbst und dann durch nur eine Abführleitung in eine Filtereinheit eingebracht werden. Eine solche Anordnung kann sich bei dem Parallelbetrieb kleinerer Kessel oder auch bei sehr großen Kesselanlagen empfehlen, beispielsweise wenn ausreichender Raum für den Aufbau entsprechender Filterkapazitäten gegeben ist. Auch in diesem Fall kann der Einsatz nur eines Reaktors vollständig ausreichen, um eine entsprechend positive Durchströmung zu erreichen ohne unnötiges Ablagern oder Anbacken befürchten zu müssen.

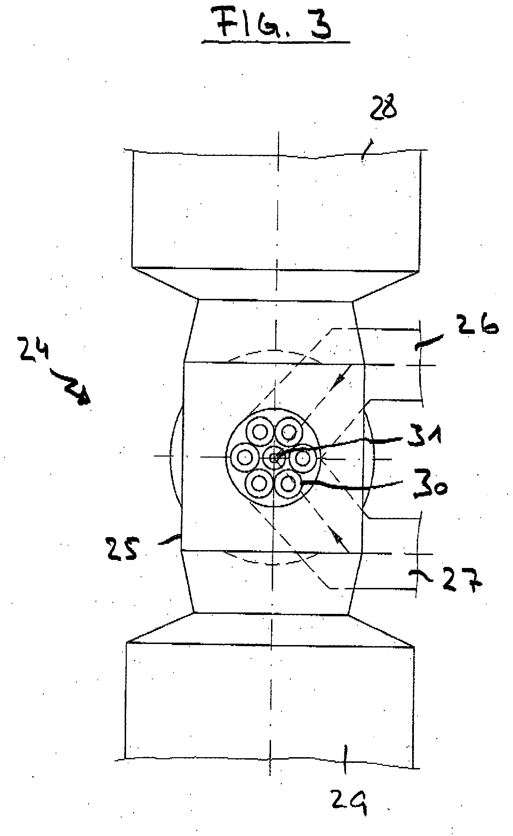

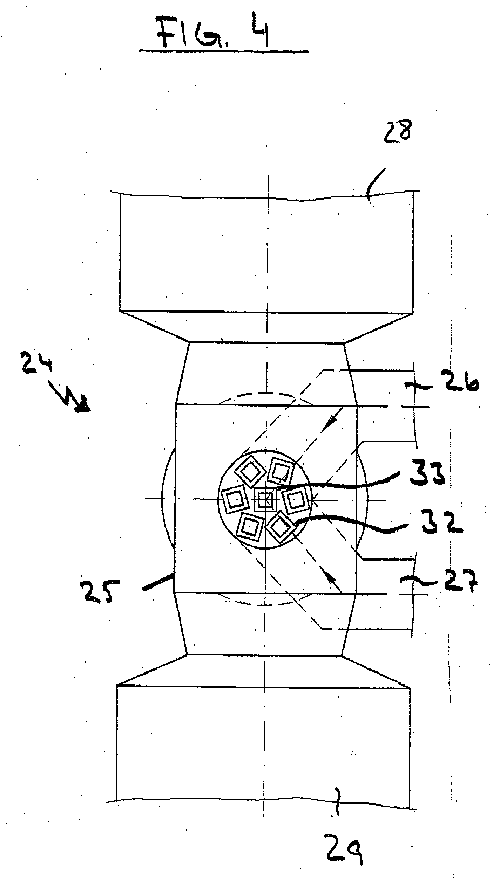

Bei den Fign. 3 und 4 wird praktisch von oben auf die in Fig. 2 gezeigte Anlage drauf geblickt, wobei explosionsartig der Düsenbereich sichtbar gemacht ist. In den Fign. 3 und 4 sind gleiche Elemente mit gleichen Bezugszeichen versehen. Zwei winklig zueinander angeordnete Zuführleitungen 26, 27 führen in den Bereich der Düsen 30, 31 gemäß Fig. 3 bzw. Düsen 32, 33 gemäß Fig. 4. Es ist erkenntlich, dass ein Düsensatz 30, 31 aus Düsen unterschiedlichen Durchmessers bestehen kann, ebenso wie der Düsensatz 32, 33 unterschiedliche Querschnitte zeigt. Auch können die Formen variiert werden, wie der Unterschied zwischen Fig. 3 und 4 zeigt. Aber auch Durchmischungen von Formen und Durchmesssrvariationen in einer Düseneinheit liegen im Rahmen der Erfindung. Die Düseneinheiten sind so gewählt, dass ein optimaler Rauchgasstrom in den Wirbelschichtreaktor ermöglicht wird, um auf diese Weise dort optimale Durchströmungsbedingungen zu erzielen. Nicht gezeigt sind die Feststoffeinlasse im Bereich der Düsen 30, 31, 32, 33, die dort seitlich ausgebildet sind und das Sorptionsmittel seitlich in die Düsen und damit in den Rauchgasstrom einbringen lassen. Nach dem Durchströmen des Wirbelschichtreaktors verlassen die Rauchgase den Bereich durch die Abführleitungen nach beiden Seiten in den Bereich der Filter 28, 29.

Es versteht sich von selbst, dass die gezeigten Ausführungsbeispiele nur der Erläuterung dienen und nicht beschränkend sind. Nicht nur können unterschiedliche Zahlen von einen oder mehrfachen Einlassleitungen mit unterschiedlichen Zahlen von einer oder mehreren Auslassleitungen kombiniert werden, es können unterschiedliche Anzahlen von Düsen unterschiedlicher Durchmesser und Form und Feststoffeinlässe kombiniert werden. Darüber hinaus kann zur Erreichung eines optimalen Partialdruckes des Wassers im Reaktorbereich auch eine Befeuchtung mittels Dampf erfolgen. Auch diese baulichen Einrichtungen sind in den Figuren nicht gezeigt und werden in üblicher Weise ausgebildet.

### Bezugszeichenliste

- 1: Rauchgasreinigungsanlage
- 2: Wirbelschichtreaktor
- 3: Zuleitung
- 4: Düseneinheit
- 5: Auslassbereich
- 6: Filter
- 7: Rückführleitung
- 10: Rauchgasreinigungsanlage
- 11: Wirbelschichtreaktor
- 12: Zuleitung
- 13: Zuleitung
- 14: Düseneinheit
- 15: Auslassbereich
- 16: Abführungsleitung
- 17: Abführungsleitung
- 18: Filter
- 19: Filter
- 20: Rückführungsleitung
- 21: Rückführungsleitung
- 24: Rauchgasreinigungsanlage
- 25: Auslassbereich
- 26: Zuleitung
- 27: Zuleitung
- 28: Abführungsleitung/Filter
- 29: Abführungsleitung/Filter
- 30: Düse
- 31: Düse
- 32: Düse
- 33: Düse

## Patentansprüche

1. Rauchgasreinigungsanlage mit einem Wirbelschichtreaktor mit einer Rauchgaseinlasseinheit und einer Rauchgasauslasseinheit,
**dadurch gekennzeichnet,**
**dass** sich an die Rauchgaseinlasseinheit eine Düseneinheit anschließt, die mit Düsen bestückt ist, wobei die Düsen einen unterschiedlichen Querschnitt aufweisen.

2. Rauchgasreinigungsanlage nach Anspruch 1, **dadurch gekennzeichnet, dass** die Düseneinheit wenigstens einen seitlichen Feststoffeinlass aufweist.

3. Rauchgasreinigungsanlage nach Anspruch 2, **dadurch gekennzeichnet, dass** an mehreren Düsen ein seitlicher Feststoffeinlass ausgebildet ist.

4. Rauchgasreinigungsanlage nach einem der vorhergehenden Ansprüche, **dadurch gekennzeichnet, dass** die Rauchgasauslasseinheit wenigstens zwei winklig zueinander angeordnete Rauchgasaustritte aufweist.

5. Rauchgasreinigungsanlage nach Anspruch 4, **dadurch gekennzeichnet, dass** die Rauchgasauslasseinheit als Haube mit wenigstens zwei Austrittsrohranschlüssen ausgebildet ist.

6. Rauchgasreinigungsanlage nach einem der vorhergehenden Ansprüche, **dadurch gekennzeichnet, dass** die Rauchgaseinlasseinheit wenigstens zwei winklig zueinander angeordnete Rauchgaseintritte aufweist.

7. Rauchgasreinigungsanlage nach einem der vorhergehenden Ansprüche, **dadurch gekennzeichnet, dass** diese eine Dampf-Befeuchtungseinheit aufweist.

## Claims

1. A flue gas purification plant comprising a fluidized-bed reactor having a flue gas inlet unit and a flue gas outlet unit,
**characterized in**
**that** a nozzle unit is connected to the flue gas inlet unit, which nozzle unit is equipped with nozzles, wherein the nozzles comprise different cross sections.

2. A flue gas purification plant according to claim 1, **characterized in that** the nozzle unit at least comprises one lateral solid matter inlet.

3. A flue gas purification plant according to claim 2, **characterized in that** a lateral solid matter inlet is formed on several nozzles.

4. A flue gas purification plant according to one of the preceding claims, **characterized in that** the flue gas outlet unit at least comprises two flue gas exits which are arranged at an angle to each other.

5. A flue gas purification plant according to claim 4, **characterized in that** the flue gas outlet unit is designed as a hood comprising at least two discharge pipe connections.

6. A flue gas purification plant according to one of the preceding claims, **characterized in that** the flue gas inlet unit at least comprises two flue gas entries which are arranged at an angle to each other.

7. A flue gas purification plant according to one of the preceding claims, **characterized in that** this one comprises a steam humidification unit.

## Revendications

1. Installation d'épuration des gaz de fumée comprenant un réacteur à lit fluide ayant une unité d'entrée des gaz de fumée et une unité de sortie des gaz de fumée,
**caractérisée en ce**
**qu'**une unité de buses se raccorde à l'unité d'entrée des gaz de fumée, laquelle unité de buses est équipée de buses, les buses comprenant des sections transversales différentes.

2. Installation d'épuration des gaz de fumée selon la revendication 1, **caractérisée en ce que** l'unité de buses comprend au moins une entrée de matières solides latérale.

3. Installation d'épuration des gaz de fumée selon la revendication 2, **caractérisée en ce qu'**une entrée de matières solides latérale est formée sur plusieurs buses.

4. Installation d'épuration des gaz de fumée selon l'une des revendications précédentes, **caractérisée en ce que** l'unité de sortie des gaz de fumée comprend au moins deux sorties des gaz de fumée disposées angulairement l'une par rapport à l'autre.

5. Installation d'épuration des gaz de fumée selon la revendication 4, **caractérisée en ce que** l'unité de sortie des gaz de fumée est configurée comme une hotte comprenant au moins deux raccords de tuyau de sortie.

6. Installation d'épuration des gaz de fumée selon l'une des revendications précédentes, **caractérisée en ce que** l'unité d'entrée des gaz de fumée comprend au moins deux entrées des gaz de fumée disposées angulairement l'une par rapport à l'autre.

7. Installation d'épuration des gaz de fumée selon l'une des revendications précédentes, **caractérisée en ce que** celle-ci comprend une unité d'humidification à vapeur.
